(19) Europäisches Patentamt

European Patent Office

Office européen des brevets

(11) Veröffentlichungsnummer: **0 330 086**

**A1**

(12) **EUROPÄISCHE PATENTANMELDUNG**

(21) Anmeldenummer: **89102751.8**

(22) Anmeldetag: **17.02.89**

(51) Int. Cl.⁴: **A01G 9/22 , F16B 5/06**

(30) Priorität: **22.02.88 CH 662/88**

(43) Veröffentlichungstag der Anmeldung:
**30.08.89 Patentblatt 89/35**

(84) Benannte Vertragsstaaten:
**AT DE ES FR IT**

(71) Anmelder: **AGERO AG**

**CH-8255 Schlattingen(CH)**

(72) Erfinder: **Kunz, Kurt**
**Hauptstrasse 89**
**CH-8255 Schlattingen(CH)**

(74) Vertreter: **Troesch, Hans Alfred, Dr. Ing. et al**
**Walchestrasse 19**
**CH-8035 Zürich(CH)**

(54) **Vorrichtung zum Verbinden mindestens zweier längsausgedehnter im wesentlichen gerader Randpartien von Folien- oder gewebeartigen Gebilden.**

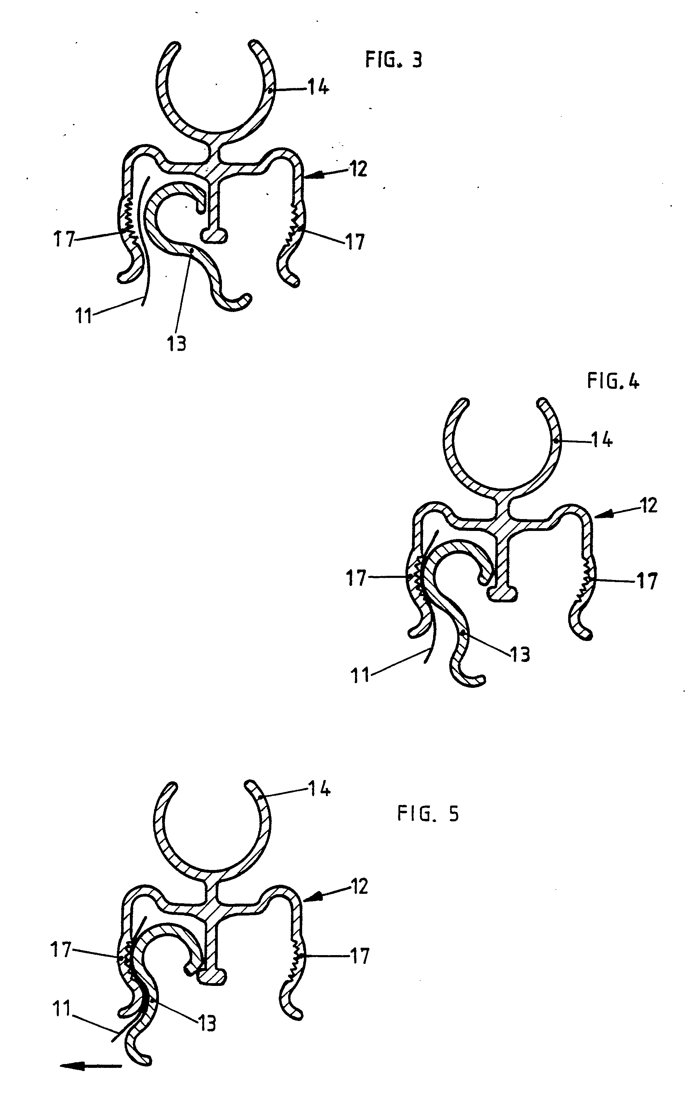

㉗ Um zwei längsausgedehnte im wesentlichen gerade Randpartien von Folien- oder gewebeartigen Gebilden (11) zu verbinden, wird ein längsausgedehntes Profil (12) vorgeschlagen, welches in Längsrichtung ausgebildet mindestens eine schlitzförmige Aufnahme umfasst und am Profil (12) mindestens eine als Klemmteil (17) ausgebildete Partie, gegen die ein Verriegelungselement (13) verriegelbar ist. Die Verriegelung des Verriegelungselementes (13) am Klemmteil (17) kann derart erfolgen, dass das Profil (12) und das Verriegelungselement (13) derart unterschiedliche Durchmesser aufweisen, dass das Verriegelungselement von einer ersten losen Position (Fig. 3) durch eine Drehbewegung fest verriegelt werden kann.

FIG. 3

EP 0 330 086 A1

## Vorrichtung zum Verbinden mindestens zweier längsausgedehnter im wesentlichen gerader Randpartien von Folien- oder gewebeartigen Gebilden

Die vorliegende Erfindung betrifft eine Vorrichtung zum Verbinden mindestens zweier längsausgedehnter im wesentlichen gerader Randpartien von Folien-oder gewebeartigen Gebilden, einen Faltbehang oder ein Rollo mit einer Vorrichung sowie ein Verfahren zum Verbinden mindestens zweier längsausgedehnter im wesentlichen gerader Randpartien von Folien- oder gewebeartigen Gebilden und eine Anwendung des Verfahrens.

Anstelle von den alther gebräuchlichen Rolläden oder gliederartigen Rollzügen werden heute aus verschiedenen Gründen vermehrt Faltbehänge, Rollos usw. verwendet. Insbesondere bei den heute sehr beliebten Wintergärten oder bei Glasdächern und Glasfronten werden, z.B. zur Beschattung oder als Wärmeschutz, oft die erwähnten Faltbehänge oder Rollos installiert - sowohl im horizontalen, wie auch im geneigten oder vertikalen Einsatz.

Diese Faltbehänge oder Rollos bestehen im wesentlichen aus Geweben oder metallisierten Folien, welche je nach Faltung, z.B. alle 40 cm in Querrichtung, mit einem Profil versehen sind. Diese Profile sind je nach Anforderungen aus Metall, Holz oder Kunststoff gefertigt. Das Gewebe oder die Folie wird dabei durch Nähen, Schweissen, Kleben usw. im Profil befestigt und in diesem gehalten, was einen grossen Arbeitsaufwand darstellt. Zudem müssen heute die Faltbehänge oder Rollos masslich vorher festgelegt gefertigt und dann als ganzes Stück auf die Baustelle transportiert werden, damit sie dort montiert werden können. Besonders bei reflektierenden Folien, wie metallbeschichteten Folien, ist dies problematisch, da mit dem geschilderten Prozedere leicht Knitterfalten bei der Montage entstehen können.

Es ist daher eine Aufgabe der Erfindung, einen Weg vorzuzeigen, wie die geschilderten Probleme überwunden werden können.

Erfindungsgemäss wird dies durch eine Vorrichtung, vorzugsweise nach mindestens einem der Ansprüche, insbesondere nach Anspruch 1, gelöst.

Zum Verbinden mindestens zweier längsausgedehnter im wesentlichen gerader Randpartien von Folien-oder gewebeartigen Gebilden, die beispielsweise die einzelnen Streifen eines Faltbehanges oder eines Rollos darstellen, wird eine Vorrichtung vorgeschlagen, die mindestens ein im wesentlichen längsausgedehntes Profil umfasst, welches in Längsrichtung ausgebildet mindestens eine schlitzförmige Aufnahme umfasst, und am Profil mindestens eine als Klemmteil ausgebildete Partie vorgesehen ist, gegen die ein Verriegelungselement verriegelbar ist.

Die Verriegelung ist beispielsweise dadurch zu erreichen, dass das Profil und das Verriegelungselement derart unterschiedliche Durchmesser aufweisen, dass in einer ersten Position das Verriegelungselement im Profil beweglich gelagert einen Abstand vom Klemmteil aufweist, durch welchen die Folie oder das Gewebe eingeführt werden kann, und dass in einer zweiten Position das Verriegelungselement klemmend am Klemmteil im Profil verriegelt ist und so das eingeführte Material festgehalten wird. Die Verriegelung des Verriegelungselementes kann beispielsweise durch eine Drehbewegung des Elementes erreicht werden.

Als Alternative dazu vorgeschlagen wird ein Klemmteil, das rasterartig ausgebildet ist, und ein Verriegelungselement, das im Klemmteil verriegelnd eingerastet werden kann. Hierbei kann es sich beispielsweise um eine Einschnappvorrichtung handeln, welche beim Drücken des Verriegelungselementes gegen das Klemmteil einschnappt. Das eingeführte Material wird so in der Schnappverbindung gehalten.

Bevorzugt wird vorgeschlagen, dass das Verriegelungselement wieder lösbar am Klemmteil verriegelbar ist. Dadurch wird gewährleistet, dass das eingeführte Material zu einem späteren Zeitpunkt auch wieder entfernt werden kann, wodurch eine Demontage, beispielsweise eines Rollos oder eines Faltbehanges, erleichtert wird.

In einer weiteren Ausführungsvariante wird vorgeschlagen, dass mindestens zwei schlitzförmige Aufnahmen am Profil vorgesehen sind, und dass im Profil mindestens zwei Verriegelungselemente, je eines ausgerichtet auf eine Aufnahme, angeordnet sind.

Dadurch können die geraden Randpartien der Folienoder gewebeartigen Gebilde je einzeln im Profil festgeklemmt werden.

Bei Verwendung von mindestens zwei schlitzförmigen Aufnahmen am Profil wird weiter vorgeschlagen, dass die beiden mindestens zwei schlitzförmigen Aufnahmen lösbar entlang je einer in Längsrichtung ausgebildeten Partie der beiden Aufnahmen zusammengefügt sind. Dadurch wird es möglich, je eine Folie oder das Gewebe in je eine schlitzförmige Aufnahme einzuführen und darin zu verriegeln, wenn die beiden Aufnahmen getrennt sind. Nach Einführen der Folie oder des Gewebes werden dann die beiden Aufnahmen zur Bildung des Profiles wieder lösbar zusammengefügt.

Weiter wird vorgeschlagen, dass das je auf eine Aufnahme ausgerichtete Verriegelungselement eine in Längsrichtung ausgebildete u- oder v-förmige Klemmschiene ist.

Damit das Profil beispielsweise je seitlich davon an einer Führung, quer zum Profil verlaufend, verschiebbar lagerbar ist, wird am Profil mindestens eine weitere Aufnahme vorgeschlagen, für eine Halterung und/oder Oese, die ihrerseits in der Führung gelagert sind.

Alternativ dazu wird vorgeschlagen, dass anstelle einer Halterung und/oder Oese Rollen in der weiteren Aufnahme gelagert sind, die ihrerseits, beispielsweise in Schienen, rollbar gelagert sind.

In einer weiteren Ausführungsvariante wird vorgeschlagen, dass das Verriegelungselement weitgehendst auf dem Klemmteil aufliegt und so die Folie oder das Gewebe im wesentlichen durch das Eigengewicht des Elementes klemmend festgehalten wird. Klemmteil und Verriegelungselement können dabei derart ausgebildet sein, dass die Klemmwirkung bei Zug der Folie oder des Gewebes noch verstärkt wird.

Weiter wird vorgeschlagen, dass Verriegelungselement und Klemmteil gegeneinander vorgespannt sind. Zum Einführen und Festklemmen der Randpartien der Folien oder Gewebe müssen durch äussere Krafteinwirkung das Verriegelungselement und das Klemmteil voneinander getrennt werden, worauf nach Einführung der Randpartien die äussere Kraft gegen die Klemmwirkung wieder aufgehoben wird.

Das Profil kann beispielsweise aus Metall, wie vorzugsweise Aluminium, hergestellt werden.

Ebenso ist aber auch eine Herstellung aus Kunststoff, wie beispielsweise einem Thermoplasten, verstärkt und unverstärkt, vorstellbar.

Die vorgeschlagenen Vorrichtungen eignen sich insbesondere für Rollos oder Faltbehänge.

Weiter vorgeschlagen wird ein Verfahren zum Verbinden mindestens zweier längsausgedehnter im wesentlichen gerader Randpartien von Folien- oder gewebeartigen Gebilden, indem die Randpartien mindestens ein längsausgedehntes Profil entlang einer längsausgedehnten Aufnahme im Profil eingeführt werden und durch Betätigen mindestens einer im Profil angeordneten Klemmvorrichtung klemmend festgehalten werden.

Das beschriebene Verfahren eignet sich insbesondere zur Herstellung eines Rollos oder eines Faltbehanges.

Die erfindungsgemäss beschriebenen Vorrichtungen und das Verfahren eignen sich aber auch ganz allgemein, um Folien- oder gewebeartige Gebilde, wie Tücher, Folien, grosse Papierstreifen usw. aneinanderzuheften oder miteinander zu verbinden. Insbesondere dann, wenn diese Verbindung entlang längerer Seitenkanten und möglichst stabil zu erfolgen hat.

Die Erfindung wird anschliessend anhand eines Beispiels als Klemmprofil eines Faltbehanges, unter Bezug auf Figuren betrieben.

Es zeigen:

Fig. 1 einen Ausschnitt eines Faltbehanges mit als Klemmprofile ausgebildete erfindungsgemässe Vorrichtungen,

Fig. 2 ein einzelnes Klemmprofil des Faltbehanges von Fig. 1,

Fig. 3 das erfindungsgemässe Klemmprofil im Querschnitt beim Einführen einer Folie,

Fig. 4 das Klemmprofil im Querschnitt während des Klemmvorganges der Folie,

Fig. 5 die Folie im Klemmprofil, im fixierten Zustand.

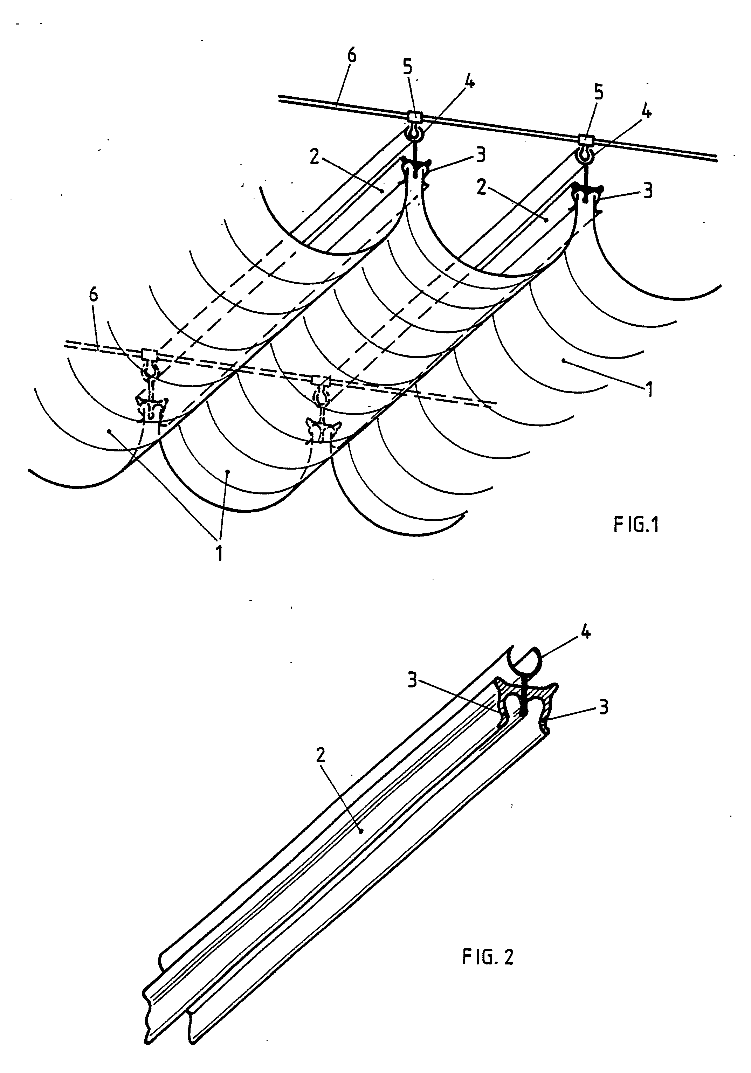

In Fig. 1 wird ausschnittsweise ein Faltbehang dargestellt, bestehend aus den einzelnen Stoff- oder Folienelementen 1, welche in Klemmprofilen 2 festgehalten werden. Die Klemmprofile 2 umfassen, in Längsrichtung ausgebildet, je zwei Klemmvorrichtungen 3, wobei in je einer Klemmvorrichtung 3 die Abschlusskante eines Stoff- oder Folienelementes 1 festgeklemmt ist. An der den Klemmvorrichtungen 3 entgegengesetzten Seite des Klemmprofils 2 angeordnet, ist eine Aufnahme 4 für eine Halterung 5, durch welche das Klemmprofil 2 an einer Führungsschiene und/oder einem Zug 6 verschiebbar gelagert ist. Dabei ist auf beiden Endabschlüssen des Klemmprofils 2 je eine Halterung 5 angeordnet, und entsprechend ist der Faltbehang quer zu den Klemmprofilen 2 an den Führungsschienen 6 hängend, verschiebbar gelagert.

In Fig. 2 ist das Klemmprofil 2 aus Fig. 1 als Einzelelement dargestellt, ohne die Folienelemente 1. An der Stirnseite des Klemmprofils 2 werden die beiden Klemmvorrichtungen 3 deutlich, sowie die an der entgegengesetzten Seite des Klemmprofils 2 angeordnete Aufnahme 4 für eine Halterung. Die beiden Klemmvorrichtungen 3 sind in der Fig. derart längsausgedehnt dargestellt, dass sie sich entlang des ganzen Klemmprofils 2 als ein einziges Stück erstrecken. Denkbar ist aber auch eine Unterteilung der beiden Klemmvorrichtungen 3 in einzelne Segmente. Dadurch ist das Festklemmen der Folie segmentweise und nicht auf einmal als Ganzes möglich. Dasselbe gilt im übrigen auch für die Aufnahme 4, welche beispiels weise nur je stirnseitig am Profil angeordnet werden muss.

Die Fig. 3 bis 5 zeigen den Einführvorgang einer Folie in ein erfindungsgemässes Klemmprofil, welches im Querschnitt dargestellt ist. Das Klemmprofil umfasst dabei den eigentlichen Profilkörper 12, mit zwei innenliegend ausgebildeten Klemmpartien 17. Gegen die Klemmpartien 17 klemmend verriegelbar angeordnet, ist ein Verriegelungselement oder Klemmteil 13, wobei aus Uebersichtsgründen auf die Darstellung eines zweiten Klemmteiles verzichtet wurde. An der Klemmvorrichtung, bestehend aus Klemmteil 13 und Klemmpartie 17, entgegengesetzten Seite des Profils 12 angeordnet, ist die Aufnahme 14, in welche eine Halterung für die Lagerung des Profils, beispielsweise in einer Schiene, eingeführt werden kann.

In Fig. 3 ist das Klemmteil 13 im entriegelten Zustand, wodurch eine Folie 11 zwischen das Klemmteil 13 und die Klemmpartie 17 eingeschoben werden kann.

Gemäss Fig. 4 wird nun das Klemmteil 13 gegen die Klemmpartie 17 gedrückt, wodurch die Folie 11 festgeklemmt wird.

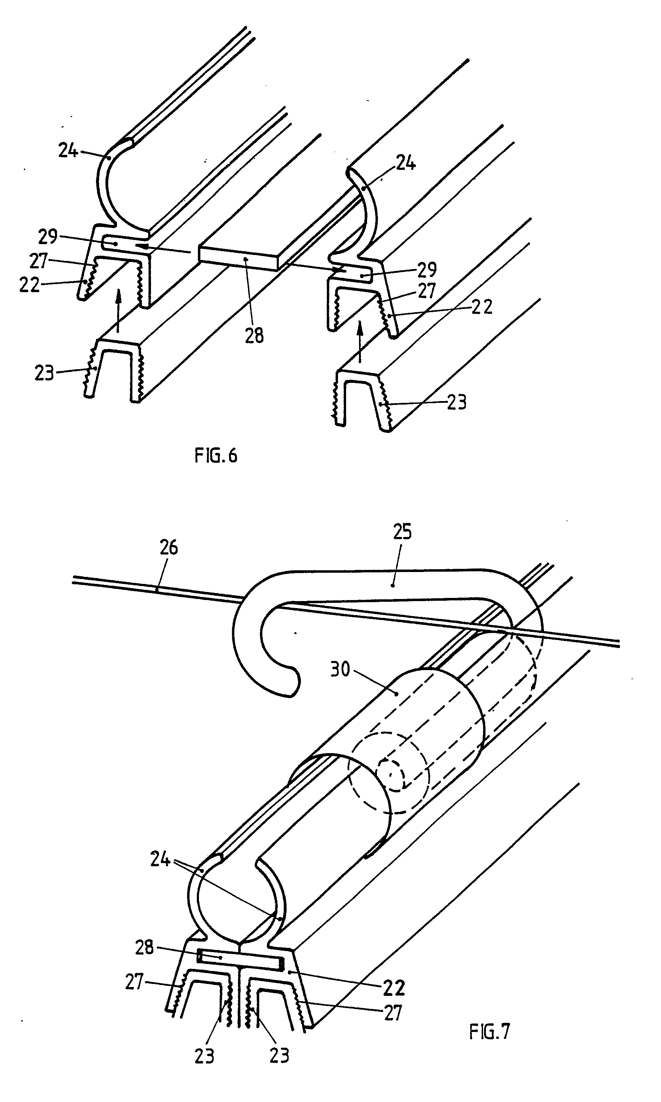

In Fig. 5 schlussendlich wird das Klemmteil 13 noch gänzlich in Pfeilrichtung verriegelt, wodurch ein sich Wiederöffnen des Klemmteils verunmöglicht wird. Dadurch ist die Folie 11 endgültig im Profil 12 festgeklemmt.

Analog würde in der in den Fig. 3 bis 5 freien Kammer des Profils 12 eine weitere Folie durch ein Klemmteil (nicht dargestellt) festgeklemmt.

Die Figuren 6 und 7 zeigen eine weitere mögliche erfindungsgemässe Ausführungsvariante eines Profils, umfassend mindestens zwei Aufnahmen, die entlang je einer in Längsrichtung ausgebildeten Partie der beiden Aufnahmen zusammengefügt oder getrennt werden können.

Die beiden als quasi Halbprofile 22 dargestellten Aufnahmen umfassen je eine oder zwei innenliegende, als Klemmteile ausgebildete Partien 27, je eine längsausgerichtete, kerbenförmig ausgebildete Partie 29, sowie je eine längsausgerichtete, hälftige weitere Aufnahme 24. Die beiden je auf eine Aufnahme ausgerichteten Verriegelungselemente 23 bestehen je aus einer in Längsrichtung ausgebildeten v-förmigen Klemmschiene.

Nach dem Einführen, beispielsweise je einer Folie in die beiden Aufnahmen, werden diese entlang der beiden in Längsrichtung ausgebildeten kerbenförmigen Partien 29 durch Anbringen auf ein Verbindungsteil 28 zusammengefügt, wodurch das erfindungsgemässe Profil, dargestellt in Fig.7, entsteht. Die beiden in Längsrichtung ausgbildeten Aufnahmen, resp. Halbprofile 22, sind nun mittels dem Teil 28 zusammengefügt, und bilden so ein einheitliches Längsprofil mit zwei Aufnahmen. Die beiden Verriegelungselemente 23 sind nun in die beiden Aufnahmen eingefügt dargestellt, wodurch beispielsweise je eine Folie in den beiden Aufnahmen klemmend verriegelt ist.

Für das Zusammenhalten der beiden Halbprofile 22 ist weiter eine Hülse oder ein Klemmteil 30 über die beiden weiteren Halbaufnahmeteile 24 gestülpt worden, um die beiden Halbprofile 22 zusammenzuhalten. Um das Doppelprofil an einem Tragseil oder Zug 26 aufzuhängen, ist weiter ein Halterungshaken 25 in der durch die beiden weiteren Halbaufnahmen 24 gebildeten Aufnahmen eingelassen, angeordnet.

Der Vorteil des in den beiden Figuren 6 und 7 dargestellten, trennbaren Profiles besteht darin, dass je eine Folie oder ein Gewebe je in eine Aufnahme eingegeben und verriegelt werden kann, und anschliessend bei der Montage die beiden Aufnahmen, resp. Halbprofile, zusammengefügt werden können. Auch die Demontage wird dadurch wesentlich vereinfacht.

Die in den Figuren 1 bis 7 dargestellten, beispielsweisen Ausführungen von erfindungsgemässen Vorrichtungen von Klemmprofilen stellen nur eine bechränkte Anzahl von Möglichkeiten dar. Selbst verständlich kann die Ausbildung der Profile mit den Klemmpartien, sowie die Verriegelungselemente auf vielfältigste Art und Weise variiert und abgeändert werden.

## Ansprüche

1. Vorrichtung zum Verbinden mindestens zweier längsausgedehnter im wesentlichen gerader Randpartien von Folien- oder gewebeartigen Gebilden (1, 11), dadurch gekennzeichnet, dass sie mindestens ein im wesentlichen ausgedehntes Profil (2, 12, 22) umfasst, welches in Längsrichtung ausgebildet mindestens eine schlitzförmige Aufnahme umfasst und am Profil mindestens eine als Klemmteil (17, 27) ausgebildete Partie vorgesehen ist, gegen die ein Verriegelungselement (3, 13, 23) verriegelbar ist.

2. Vorrichtung, vorzugsweise nach mindestens einem der Ansprüche, wie nach Anspruch 1, dadurch gekennzeichnet, dass das Profil (2, 12, 22) und das Verriegelungselement (3, 13, 23) derart unterschiedliche Durchmesser aufweisen, dass in einer ersten Position das Verriegelungselement (3, 13, 23) im Profil ( 2, 12, 22) einen Abstand vom Klemmteil aufweist, durch welchen das Folien- oder gewebeartige Gebilde (1, 11) eingeführt werden kann, und dass in einer zweiten Position das Verriegelungselement klemmend am Klemmteil im Profil verriegelbar ist, und so das eingeführte Material festgehalten wird.

3. Vorrichtung, vorzugsweise nach mindestens einem der Ansprüche, wie nach Anspruch 1, dadurch gekennzeichnet, dass das Klemmteil eine rasterartige Partie umfasst, und dass das Verriegelungselement durch Einrasten am Klemmteil verriegelbar ist.

4. Vorrichtung, vorzugsweise nach mindestens einem der Ansprüche, wie nach einem der Ansprüche 1 bis 3, dadurch gekennzeichnet, dass das Verriegelungselement wieder lösbar am Klemmteil verriegelbar ist.

5. Vorrichtung, vorzugsweise nach mindestens einem der Ansprüche, wie nach einem der Ansprüche 1 bis 4, dadurch gekennzeichnet, dass das Profil (2, 12) mindestens zwei schlitzförmige Aufnahmen (22) in Längsrichtung umfasst, und dass im Profil (2, 12) mindestens zwei Verriegelungselemente (3, 13, 23), je ausgerichtet auf eine Aufnahme, angeordnet sind.

6. Vorrichtung, vorzugsweise nach mindestens einem der Ansprüche, wie nach Anspruch 5, dadurch gekennzeichnet, dass die mindestens zwei schlitzförmigen Aufnahmen (22) lösbar entlang je einer in Längsrichtung ausgebildeten Partie (29) der Aufnahme zusammengefügt sind.

7. Vorrichtung, vorzugsweise nach mindestens einem der Ansprüche, wie nach einem der Ansprüche bis 6, dadurch gekennzeichnet, dass das Verriegelungselement (23) eine in Längsrichtung ausgebildete u- oder v-förmige Klemmschiene ist.

8. Vorrichtung, vorzugsweise nach mindestens einem der Ansprüche, wie nach einem der Ansprüche 1 bis 7, dadurch gekennzeichnet, dass in Längsrichtung des Profils (2, 12, 22) mehrere Verriegelungselemente (3, 13, 23) vorgesehen sind.

9. Vorrichtung, vorzugsweise nach mindestens einem der Ansprüche, wie nach einem der Ansprüche 1 bis 8, dadurch gekennzeichnet, dass das Profil mindestens eine weitere Aufnahme (4, 14, 24) für eine oder mehrere Halterungen (5, 25) und/oder Oesen umfasst, um das Profil im wesentlichen quer dazu an einer Führung verschiebbar zu lagern.

10. Vorrichtung, vorzugsweise nach mindestens einem der Ansprüche, wie nach einem der Ansprüche 1 bis 9, dadurch gekennzeichnet, dass in der weiteren Aufnahme (4, 14, 24) Rollen angeordnet sind, um das Profil, vorzugsweise in Schienen rollend, zu lagern.

11. Vorrichtung, vorzugsweise nach mindestens einem der Ansprüche, wie nach einem der Ansprüche 1 bis 10, dadurch gekennzeichnet, dass das Verriegelungselement weitgehendst auf dem Klemmteil aufliegt und das Folien- oder gewebeartige Gebilde durch das Eigengewicht des Verriegelungselementes klemmend festgehalten wird.

12. Vorrichtung, vorzugsweise nach mindestens einem der Ansprüche, wie nach einem der Ansprüche 1 bis 11, dadurch gekennzeichnet, dass Verriegelungselement und Klemmteil gegeneinander vorgespannt sind.

13. Vorrichtung, vorzugsweise nach mindestens einem der Ansprüche, wie nach einem der Ansprüche 1 bis 12, dadurch gekennzeichnet, dass Profilund/oder Verriegelungselement aus Metall, vorzugsweise Aluminium, hergestellt sind.

14. Vorrichtung, vorzugsweise nach mindestens einem der Ansprüche, wie nach einem der Ansprüche 1 bis 12, dadurch gekennzeichnet, dass Profilund/oder Verriegelungselement aus einem Kunststoff, vorzugsweise einem thermoplastischen Kunststoff, hergestellt sind.

15. Faltbehang oder Rollo mit einer Vorrichtung, vorzugsweise nach mindestens einem der Ansprüche.

16. Verfahren zum Verbinden mindestens zweier längsausgedehnter im wesentlichen gerader Randpartien von Folien- oder gewebeartigen Gebilden (1, 11) dadurch gekennzeichnet, dass die Randpartien in mindestens ein längsausgedehntes Profil (2, 12, 22) entlang einer längsausgedehnten Aufnahme im Profil eingeführt werden und durch Betätigen mindestens eines im Profil angeordneten Verriegelungselementes (3, 13, 23) klemmend festgehalten werden.

17. Anwendung des Verfahrens nach mindestens einem der Ansprüche zur Herstellung eines Faltbehanges oder Rollos.

FIG.1

FIG. 2

FIG. 3

FIG. 4

FIG. 5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1467214 (LOUZANNE)<br>* Seite 1, linke Spalte, Absatz 6 - Seite 2, rechte Spalte, Absatz 1 *<br>* Seite 3, linke Spalte, Absatz 2; Figuren 1-4, 7 * | 1, 5, 6, 8, 12, 16 | A01G9/22<br>F16B5/06 |
| Y | | 2, 3, 4, 7, 9, 15, 17 | |
| | --- | | |
| X | US-A-4370792 (WATTS)<br>* Spalte 3, Zeile 5 - Spalte 4, Zeile 19; Figuren 1-8 * | 1, 5, 8, 12-14, 16 | |
| | --- | | |
| Y | US-A-3803671 (STUPPY)<br>* Spalte 2, Zeile 5 - Spalte 3, Zeile 60; Figuren 1-4 * | 2-4 | |
| | --- | | |
| Y | AT-B-298868 (SCHEEL)<br>* Seite 2, Zeile 25 - Zeile 57; Figuren 1, 2 * | 9, 15, 17 | |
| | --- | | |
| Y | GB-A-910194 (ANDERSON)<br>* Seite 1, Zeile 70 - Seite 2, Zeile 19; Figuren 1-3 * | 7 | RECHERCHIERTE SACHGEBIETE (Int. Cl.4) |
| | --- | | A01G |
| A | US-A-4107826 (TYSDAL)<br>* Spalte 3, Zeile 13 - Spalte 5, Zeile 51; Figuren 1-5 * | 1, 2, 4, 16 | B44C<br>F16B |
| | --- | | |
| A | DE-A-3013717 (GERHARDS)<br>* Seite 6, Absatz 7 - Seite 9, Absatz 1; Figuren 1, 4, 5 * | 10 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 01 JUNI 1989 | HERYGERS J.J. |